# EUROPEAN PATENT APPLICATION

(11) **EP 0 779 429 A2**
(43) Date of publication of application: **18.06.1997**
(21) Application number: 96309175.6
(22) Date of filing: 16.12.1996
(51) Int. Cl.: F02K 1/08, F02K 3/06

(54) **Variable area exhaust nozzle for turbofan**

(30) Priority: 14.12.1995 US 572839
(71) Applicant: UNITED TECHNOLOGIES CORPORATION, Hartford, CT 06101 (US)
(72) Inventor: Duesler, Paul w., Manchester, CT 06040 (US); Loffredo, Constantino V., Newington, CT 06111 (US); Prosser, Harold T., Jr., Vernon, CT 06066 (US); Jones, Christopher W., Manchester, CT 06040 (US)
(74) Representative: Leckey, David Herbert

(57) **Abstract**

A gas turbine engine (10) includes a translating sleeve (38) disposed within a downstream portion of an outer nacelle (20). A variable area fan exhaust nozzle (30) is defined between the trailing edge (32) of the translating sleeve (38) and a conical core cowl (26) disposed radially inward of the outer nacelle (20) and spaced apart therefrom. The translating sleeve (38) translates downstream to cooperate with the decreasing diameter of the core cowl (26) to increase the area of the fan exhaust nozzle (30).

## Description

The present invention relates to a gas turbine engine and, more particularly, to a variable area fan exhaust nozzle therefor.

Important performance criteria for modem gas turbine engines include greater thrust, minimization of weight, and reduction in noise levels and fuel consumption. As is well known in the art, a reduction in the fan pressure ratio improves the propulsive efficiency of a gas turbine engine. As the fan pressure ratio is reduced, the mass flow rate through the fan must be increased to maintain the same engine thrust. Longer fan blades increase the mass flow rate. However, reduction of the fan pressure ratio and an increase in the length of the fan blades adversely affect the fan stability. Longer fan blades rotating at lower speeds pump additional air through the fan. At cruise, the additional mass flow at the lower fan pressure ratio contributes to the engine thrust as the air exits through a fan exhaust nozzle disposed downstream of the fan. However, at takeoff, climb, and descent the additional air is restricted through the fan exhaust nozzle and the resulting back pressure on the fan negatively affects the aerodynamic stability of the fan. Thus, fan stability is a limiting factor to low fan pressure ratio engines.

Varying the pitch of the fan blades is one approach to control fan stability. The pitch of the fan blades changes to tailor the amount of airflow passing through the fan during the different modes of operation of the gas turbine engine. During takeoff, climb and descent, the amount of air pumped by the fan blades is reduced, thereby reducing back pressure and avoiding instability conditions.

Another approach to improve performance of the gas turbine engine is described in U.S. Patent No. 5,181,676 to Lair, entitled "Thrust Reverser Integrating A Variable Exhaust Area Nozzle". The patent discloses two clam shells that rotate about a pivot upon actuation to increase the exhaust area of the nozzle. A limitation of the disclosed fan nozzle is that only a small increase in the nozzle area is possible without adversely affecting external or intemal aerodynamics. Moreover, the nozzle can suffer undesirable leakage of airflow, thereby reducing the performance of the gas turbine engine. Additionally, since the fan exhaust nozzle functions as a pressure vessel, it is subjected to significant intemal pressure that tends to deform each clam shell, since they are supported only at discrete points. The clam shell, as disclosed in the above mentioned patent, must carry a significant weight penalty to control such deformation of the fan exhaust nozzle.

U.S. Patent No. 4,922,713 to Barbarin et al shows a thrust reverser with a variable exhaust cross-section. The patent discloses a translating cowl moving downstream to open an auxiliary nozzle, thereby increasing the exhaust nozzle cross-section. However, the disclosed invention is not suitable for low pressure ratio fans, because the actuation system of the disclosed configuration is limited to a sequence of operations which, for low pressure ratio fan designs, will cause instability of the fan during transition to reverse thrust. The configuration dictates that the translating cowl must be stowed prior to activation of the thrust reverser. For low pressure ratio fans, the reduction in the fan nozzle area will be detrimental to stability and will result in stalling of the fan.

Furthermore, the described configuration has significant aerodynamic and acoustic limitations. The disclosed configuration has an adverse impact on an aerodynamic efficiency of both the overall aircraft and the propulsion system. The adverse effect to the aircraft is two-fold. At high speed operations, the radial velocity component due to the auxiliary nozzle flow may have a detrimental effect on flow as it approaches the wing. At low speed operations, the radial velocity component disturbs airflow around the wing degrading lift at low speeds and thereby degrading the performance of the aircraft.

The auxiliary airflow path of the disclosed configuration adversely effects the propulsion system by introducing three aerodynamic performance loss mechanisms: shock losses produced by supersonic turning; increasing pressure drag; and increased friction losses.

Moreover, the disclosed configuration negatively impacts internal aerodynamic performance by incorporating struts that span the auxiliary airflow path. The struts reduce the aerodynamic performance of the internal flow path and also increases the scrubbing drag and pressure drag of the internal flow.

Additionally, the disclosed configuration significantly degrades acoustic performance of the aircraft because the auxiliary nozzle introduces multiple noise sources.

There is still a great need to provide a high performance gas turbine engine having minimized weight, lower noise, and lower fuel consumption levels without jeopardizing other performance characteristics thereof.

From a first aspect the invention provides a gas turbine engine having a core engine enclosed in a core cowl and an outer nacelle, said outer nacelle being disposed radially outward of said core cowl and spaced apart therefrom, said outer nacelle having an upstream portion and a downstream portion, said core coil having a generally conical shape with a decreasing downstream diameter, said outer nacelle having a thrust reverser disposed within said downstream portion thereof, said thrust reverser having a stowed position, said thrust reverser moving axially downstream into a deployed position, said gas turbine engine characterized by:
a translating sleeve slidingly mounted downstream of said thrust reverser having a fully stowed position, a fully deployed position and a plurality of intermediate deployed positions, a fan exhaust nozzle being defined between a trailing edge of said translating sleeve and said core cowl, a duct being defined between an inside surface of said translating sleeve and said core cowl, said translating sleeve being arranged to translate axially downstream in complete independence of said thrust reverser to cooperate with said decreasing downstream diameter of said core cowl to vary area of said fan exhaust nozzle and to vary amount of airflow therethrough; and
a plurality of actuating means providing translating movement to said translating sleeve between said fully stowed position and said fully deployed position.

From a second aspect the invention provides a gas turbine engine having a core engine enclosed in a core cowl and an outer nacelle disposed about a longitudinal axis, said outer nacelle being disposed radially outward of said core cowl and spaced apart therefrom, said core cowl having a generally conical shape with a decreasing downstream diameter, said gas turbine engine further comprising a translating sleeve having a fully stowed position, a fully deployed position and a plurality of intermediate deployed positions, a fan exhaust nozzle being defined between a trailing edge of said translating sleeve and said core cowl, and a duct being defined between an inside surface of said translating sleeve and said core cowl, said translating sleeve translating axially downstream to cooperate with said decreasing downstream diameter of said core cowl to vary the area of said fan exhaust nozzle, the core cowl and the translating sleeve being configured and arranged such that said duct has a generally convergent cross section for all positions of said translating sleeve.

From a third aspect the invention provides a gas turbine engine having a core engine enclosed in a core cowl and an outer nacelle disposed about a longitudinal axis, said outer nacelle being disposed radially outward of said core cowl and spaced apart therefrom, said core cowl having a generally conical shape with a decreasing downstream diameter, said gas turbine engine further comprising a translating sleeve having a fully stowed position, a fully deployed position and a plurality of intermediate deployed positions, a fan exhaust nozzle being defined between a trailing edge of said translating sleeve and said core cowl, and a duct being defined between an inside surface of said translating sleeve and said core cowl, said translating sleeve translating axially downstream to cooperate with said decreasing downstream diameter of said core cowl to vary area of said fan exhaust nozzle, the sleeve and core cowl being configured and arranged such that the cross-sectional exit area of said nozzle is monotonically increasing as a function of the length of translation of said sleeve.

According to the present invention, a gas turbine engine having a core engine enclosed in a conical core cowl and an outer nacelle with the outer nacelle being disposed radially outward of the core cowl and spaced apart therefrom and defining a duct therebetween, includes a translating sleeve disposed in the downstream portion of the outer nacelle to increase the effective area of the fan exhaust nozzle as the translating sleeve translates axially downstream to cooperate with the conical core cowl having a decreasing downstream diameter. The fan exhaust nozzle is defined between the trailing edge of the translating sleeve and the core cowl. The translating sleeve comprises an aerodynamically shaped body and a plurality of actuating means moving the translating sleeve from a fully stowed position axially downstream into a fully deployed position during climb, takeoff, and descent. The translating sleeve is also capable of having a plurality of intermediate deployed positions.

The variable area fan exhaust nozzle allows gas turbine engines to have higher efficiency at cruise without adversely effecting fan stability at other modes of operation. With the translating sleeve in the fully stowed position at cruise, the additional fan airflow improves the propulsive efficiency as the air exits through the fan exhaust nozzle. At takeoff, climb, and descent, the translating sleeve is translated axially downstream into the deployed position so that the effective area of the fan exhaust nozzle, defined between the trailing edge of the axially extended translating sleeve and reduced diameter core cowl, is increased. Therefore, at takeoff, climb, and descent the additional airflow, generated by the fan blades having a lower pressure ratio and a greater mass flow, exits through the increased area of the fan exhaust nozzle without causing sufficient back pressure to stall the fan. Additionally, the present invention improves the fuel consumption at cruise and reduces noise levels at takeoff, climb, and approach. Moreover, the plurality of intermediate deployed positions of the translating sleeve may permit a gradual and continuous variation of area of the fan exhaust nozzle, allowing further optimization of performance of the gas turbine engine by improving weight of the overall engine and fuel consumption.

One preferred feature of the present invention is that the translating sleeve comprises two semi-cylinders mating with each other to provide a continuous inner surface of the nozzle to withstand internal pressure and to minimize the leakage of airflow. Another preferred feature of the present invention is that a generally convergent cross-sectional area of the duct is maintained during all positions of the translating sleeve to result in the minimum cross-sectional area between the trailing edge of the translating sleeve and the core cowl. A further preferred feature of the present invention is that as the translating sleeve moves downstream, the nozzle exit area is monotonically increasing as a function of the length of the translation of the translating sleeve.

A preferred embodiment of the present invention will now be described by way of example only and with reference to the accompanying drawings, in which:-
FIG. 1 is a simplified, cross sectioned elevation of a gas turbine engine and a nacelle with a thrust reverser and a translating sleeve, according to the present invention;
FIG. 2 is an enlarged, sectioned elevation of the thrust reverser and the translating sleeve of FIG. 1 at cruise with the thrust reverser and translating sleeve being depicted in a stowed position;
FIG. 3 is a sectioned elevation of the thrust reverser and the translating sleeve of FIG. 2, at takeoff, climb, and descent with the translating sleeve being depicted in deployed position;
FIG. 4 is a sectioned elevation of the thrust reverser and the translating sleeve of FIG. 3 at reverse with both the thrust reverser and the translating sleeve being depicted in deployed position; and
FIG. 5 is a diagrammatic, cross sectioned elevation of the thrust reverser and the translating sleeve of FIG. 4, taken along line 5-5.

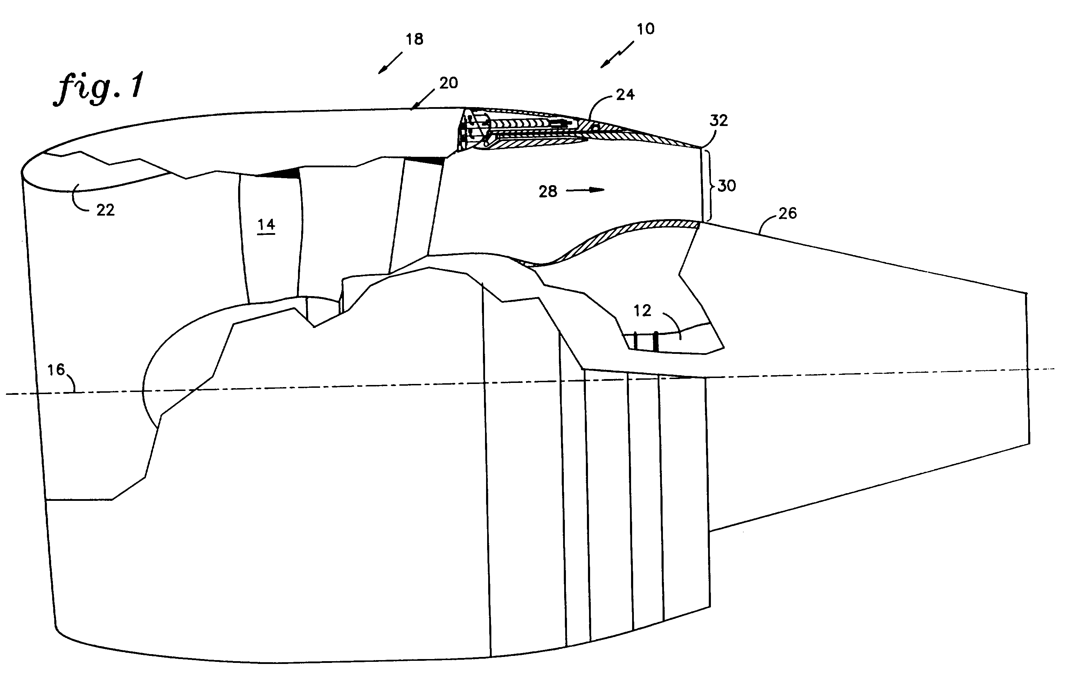

Referring to FIG. 1, a gas turbine engine 10 having a core engine 12 with a fan 14 disposed about a center longitudinal axis 16 includes an annular nacelle 18 encasing the core engine 12. The annular nacelle 18 comprises an outer nacelle 20 having an upstream portion 22 and a downstream portion 24 and a conical core cowl 26 disposed radially inward from the outer nacelle 20 and spaced apart therefrom. The outer nacelle 20 and the core cowl 26 define an annular flow path or a duct 28 therebetween. A fan exhaust nozzle 30 is defined between a trailing edge 32 of the outer nacelle 20 and the core cowl 26.

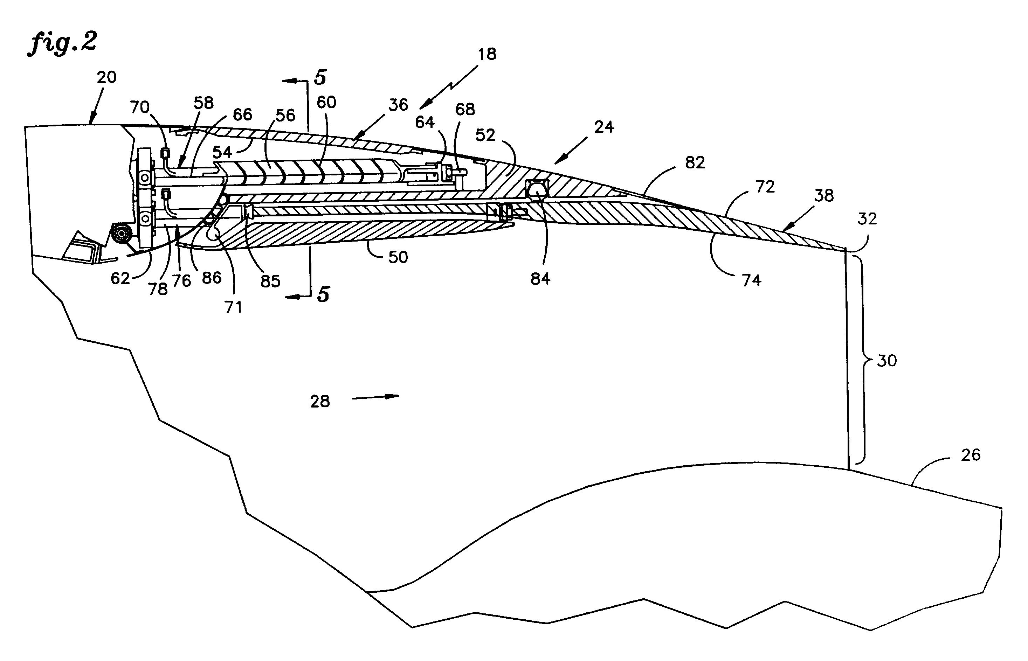

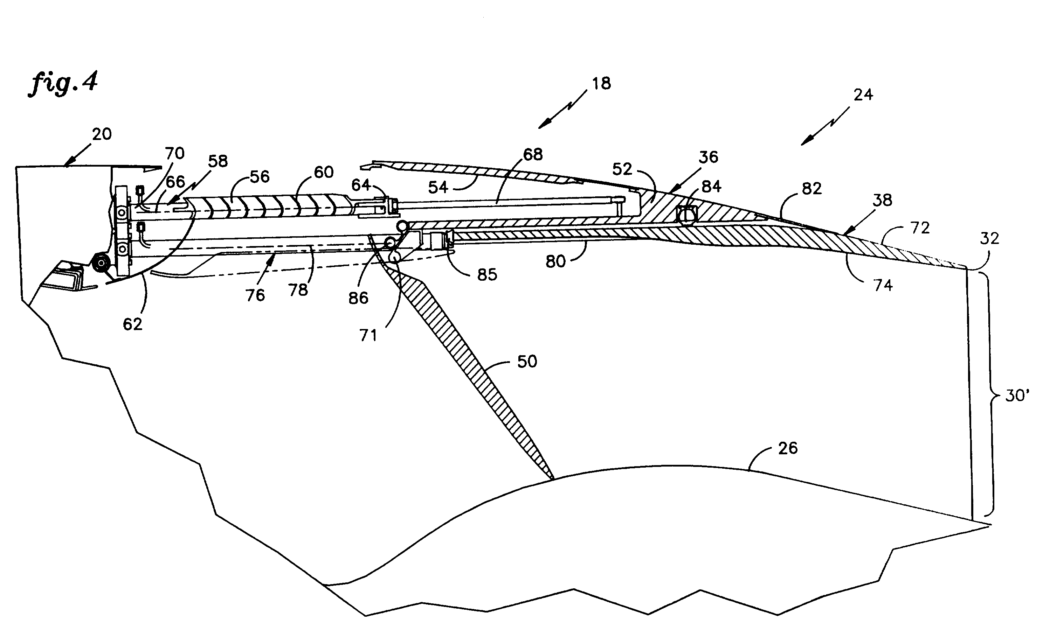

Referring to FIGS. 2-4, the downstream portion 24 of the outer nacelle 20 includes a thrust reverser mechanism 36 and a variable area fan exhaust nozzle translating sleeve 38. The thrust reverser mechanism 36 is of a conventional type, having a thrust reverser blocker door 50 and a thrust reverser movable body 52 with a recess 54 to accommodate a plurality of tuming vanes 56 and a plurality of thrust reverser actuators 58 (superseded in FIG. 2) therein. The tuming vanes 56, that include a plurality of guide vanes 60, are secured onto a torque box 62 on the upstream end thereof and a support ring 64 on the downstream end thereof. The thrust reverser actuators 58 are hydraulic actuators of the conventional type, having a cylinder 66 and a moveable rod 68, wherein the cylinder is secured onto the torque box 62 and the rod 68 is secured onto an inner surface of the recess 54. Hydraulic pressure to the actuators is provided through tubing 70. The thrust reverser blocker door 50 is disposed radially inward of the thrust reverser body 52 and is in a substantially parallel relationship to the longitudinal axis 16 when in a stowed position, as shown in FIGS. 1 and 2. The thrust reverser blocker door 50 pivots about a pivot point 71 into a deployed position, as shown in FIG. 4.

The fan exhaust nozzle translating sleeve 38, having an aerodynamically shaped outer surface 72 and inner surface 74, is disposed radially inward of the thrust reverser 36 and radially outward of the blocker door 50 and extends downstream of the thrust reverser 36. A plurality of translating sleeve actuators 76 provide axial translation to the translating sleeve 38. Each actuator 76 is of a hydraulic type, having a cylinder 78 and a moveable rod 80, with the cylinder 78 being secured onto the torque box 62 and the rod 80 being secured onto the translating sleeve 38. An aerodynamic flap seal 82 is fixedly attached to the most downstream portion of the thrust reverser 36 to bridge the gap between the thrust reverser 36 and the translating sleeve 38 to ensure an aerodynamically smooth exterior surface of the outer nacelle 20. An inflatable seal 84 is disposed between the translating sleeve 38 and the thrust reverser 36 to reduce air leakage therebetween during translation. Alternatively, a lip seal or any other type of a seal may be used to prevent air leakage. A translating sleeve bumper seal 85 is disposed on a leading edge of the translating sleeve 38 and bears against the pivot point 71, when the translating sleeve 38 is in a fully stowed position. A thrust reverser bumper seal 86 is disposed on the leading edge of the inner wall of the thrust reverser body 52 and bears against the torque box 62 when the thrust reverser 36 is in the fully stowed position to reduce air leakage.

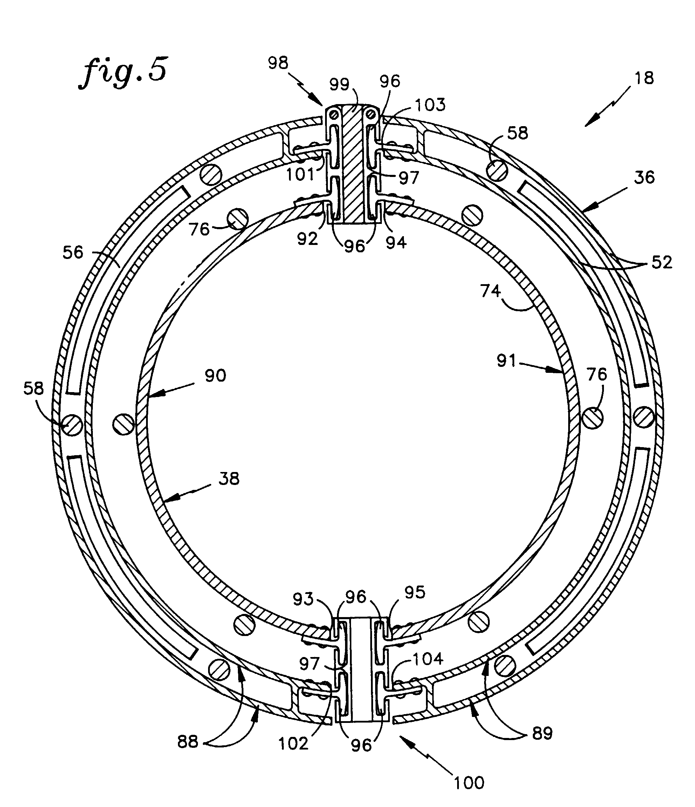

Referring to FIG. 5, the thrust reverser body 52 and the translating sleeve 38 each comprises two semi-cylinders 88, 89 and 90, 91, respectively. Each semi-cylinder 90, 91 of the translating sleeve 38 includes longitudinal edges 92-93, 94-95, respectively. Each longitudinal edge 92-95 has a T-slider 96 attached thereto. The T-sliders 96 of the longitudinal edges 92, 94 slidingly engage tracks 97 of a hinge mechanism 98. The hinge mechanism 98 includes a mounting hinge 99 securing the hinge mechanism 98 onto a pylon (not shown), which is attached to the wing of the airplane (not shown). The T-sliders 96 of the longitudinal edges 92-95 of the translating sleeve 38 slidingly engage tracks 97 of a latch mechanism 100, which is disposed substantially diagonally across from the hinge mechanism 98. The semi-cylinders 90, 91 of the translating sleeve 38 and the latch and hinge mechanisms 100, 98 form a substantially continuous annulus with the substantially continuous surface 74. The thrust reverser 36 has a mounting structure analogous to that of the translating sleeve 38. T-sliders 96 of longitudinal edges 101-104 of the semi-cylinders 88, 89 of the thrust reverser body 52 slidingly engage the tracks 97 of the hinge and latch mechanisms 98, 100. The latch mechanism 100 can be opened to allow the two sets of semi-cylinders 88-89, 90-91 of the thrust reverser 36 and of the translating sleeve 38 to pivot about the hinge mechanism 98 to allow access to the core engine 12 disposed therein. O-ring seals (not shown) are disposed at the ends of the tracks 97 to prevent air leakage between the tracks 97 and the T-sliders 96.

The cross-sectional area of the duct 28 defined between the inner surface 74 of the translating sleeve 38 and the core cowl 26 is generally convergent for all positions of the translating sleeve 38. The generally convergent cross-sectional area of the duct ensures that minimum cross-sectional area of the duct is at the nozzle exit 30, 30' at all positions of the translating sleeve 38.

Additionally, the cross-sectional exit area of the nozzle is monotonically increasing as a function of the length of the translation of the translating sleeve 38. Although any monotonically increasing behavior of the cross-sectional exit area of the nozzle is acceptable, for simplified control and greater accuracy in the positioning of the translating sleeve 38, it is desirable to have a linear change in the cross-sectional area with respect to the position of the translating sleeve.

In cruise mode, shown in FIGS. 1 and 2, both the thrust reverser 36 and the fan exhaust nozzle translating sleeve 38 are in a fully stowed position with the movable rods 68, 80 of the thrust reverser actuators 58 and of the translating sleeve actuators 76 in their retracted positions. As shown in FIG. 5, there are six thrust reverser actuators 76 and six translating sleeve actuators 58.

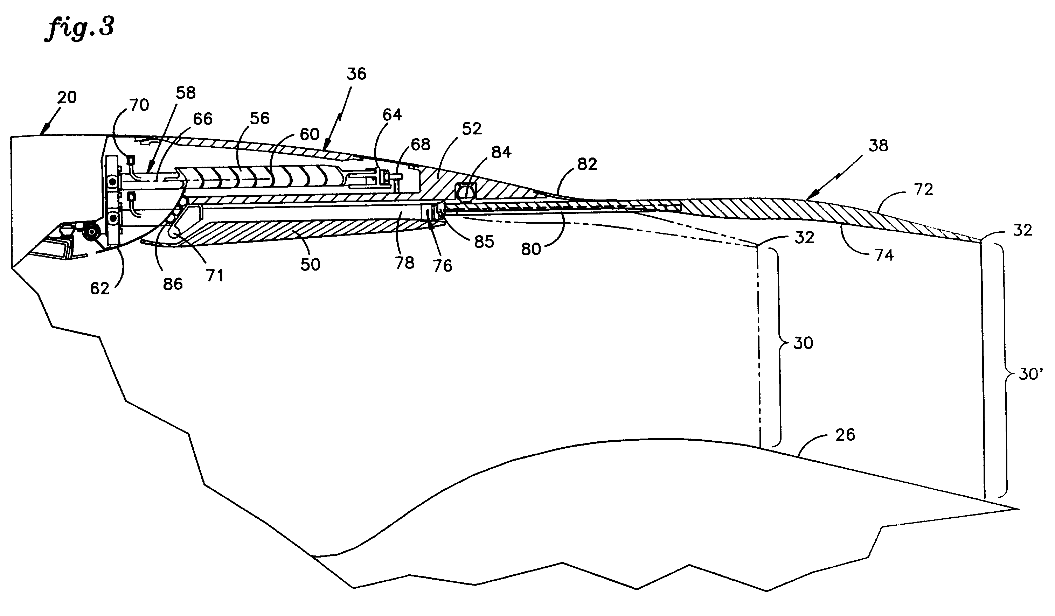

At takeoff, climb, and descent, shown in FIG. 3, the translating sleeve 38 is fully deployed. The hydraulic pressure activates the plurality of translating sleeve actuators 76 so that the moveable rods 80 extend axially downstream, thereby transmitting axial, downstream movement to the translating sleeve 38. The sliding downstream movement is effectuated as the T-sliders 96 disposed along the longitudinal edges 92-95 of the semi-cylinders 90, 91 of the translating sleeve 38 slidingly engage the tracks 97 of the hinge and latch mechanisms 98, 100. As the translating sleeve 38 is translated downstream, the annular area of the effective fan exhaust nozzle 30' defined by the trailing edge 32 of the translating sleeve 38 and the core cowl 26 is increased. The effective increase in the annular area of the fan nozzle is gained due to the decreasing downstream diameter of the conical core cowl 26. The greater area fan nozzle 30' becomes the controlling area for the exiting airflow 28 at takeoff, climb, and descent. The aerodynamically shaped inner surface 74 of the translating sleeve 38 insures that the airflow is not choked upstream of the fan exhaust nozzle 30'. A number of intermediate deployed positions between the fully stowed position and fully deployed position for the translating sleeve are possible with the hydraulic actuators being activated gradually.

After touch down, the thrust reverser 36 may be activated to provide reverse thrust to the gas turbine engine 10. For the thrust reverser 36 to be activated and effective, the translating sleeve 38 must also be activated to expose the tuming vanes 56 to the airflow 28. The translating sleeve 38 is activated and translates downstream in the same manner as described above. The thrust reverser 36 is moved axially downstream when the hydraulic pressure builds up in the thrust reverser cylinders 66 and extends the moveable rods 68 axially downstream. The thrust reverser 36 then slidingly moves downstream as the thrust reverser T-slides 96 slide downstream in the tracks 97. The reverser door 50 pivots radially inward to block the air flow path 28 from exiting through the fan exhaust nozzle 30', thereby redirecting the airflow to pass through the guide vanes 60.

The gas turbine engines that employ the present invention can achieve higher propulsive efficiency with a lower pressure ratio and higher mass flow without sacrificing engine thrust and without fan stability problems. At cruise, as the translating sleeve is in the fully stowed position, the gas turbine engines with lower pressure ratios enjoy higher thrust, reduced noise levels and improved fuel consumption. At takeoff, climb, and approach, as the translating sleeve is in one of the deployed positions, the increased area of the fan exhaust nozzle 30' allows the additional air flow generated by the fan to exit the engine 10 without causing excessive back pressure on the fan blades and thus without stalling the fan 14. Moreover, gradually and continuously varying area of the fan exhaust nozzle allows further optimization of the performance by reducing the overall weight of the gas turbine engine and improving fuel consumption.

Furthermore, the combination of the lower fan pressure ratio and the higher fan mass flow reduces noise levels at approach, takeoff and climb. The noise reduction is a result of two factors. First, the fan rotating at lower speeds thereby producing less noise. Second, the extended downstream translating sleeve affords an additional attenuation path that reduces noise levels. Moreover, the combination of the lower fan pressure ratio and the higher fan mass flow improves fuel consumption at cruise.

The variable area fan exhaust nozzle having the translating sleeve 38 of the present invention allows an increase in the area of the nozzle 30' in excess of 40%. The translating sleeve 38 achieves a significant increase in the area of the nozzle 30' without a significant weight penalty to the gas turbine engine 10. Furthermore, the two semi-cylinders 90, 91 of the translating sleeve 38 form a continuous inner surface 74 of the fan exhaust nozzle. The continuous surface 74 allows the nozzle to withstand the internal pressure of the airflow without excessive weight and to avoid air leakage.

The variable area fan nozzle described overcomes the major shortcomings of the prior art. The increase in nozzle area is achieved solely as a result of a downstream translation of the translating sleeve. Thus, the present invention avoids implementation of an auxiliary nozzle which introduces a radial velocity component to the nozzle efflux. When the engine is installed under the wing, this radial velocity component will adversely effect the basic wing lift generation at all speeds and degrade the effect of wing leading edge high lift devices at low speed operations. The present invention also avoids the adverse effect of an auxiliary nozzle to the propulsion system and to the internal aerodynamic performance of the engine.

The described arrangement is also acoustically superior to the prior art in general, and to US Patent 4,922,713 in particular. All of the airflow exiting through the nozzle is acoustically treated and attenuated.

From the above, it will be seen that a major advantage of the described embodiment is that the translating sleeve is relatively simple structurally and is able to withstand "hoop" loading with relatively light weight structure. Another advantage of the invention is that it overcomes aerodynamic, acoustic, and safety deficiencies of the prior art.

Although the invention has been shown and described with respect to exemplary embodiments thereof, it should be understood by those skilled in the art that various changes, omissions, and additions may be made thereto, without departing from the scope of the invention which is defined in the following claims. For example, this invention can be used with a thrust reverser having translating turning vanes, rather than stationary turning vanes 56, as described in the preferred embodiment.

## Claims

1. A gas turbine engine (10) having a core engine (12) enclosed in a core cowl (26) and an outer nacelle (20) disposed about a longitudinal axis, said outer nacelle (20) being disposed radially outward of said core cowl (26) and spaced apart therefrom, said core cowl (26) having a generally conical shape with a decreasing downstream diameter, said gas turbine engine further comprising a translating sleeve (38) having a fully stowed position, a fully deployed position and a plurality of intermediate deployed positions, a fan exhaust nozzle (30) being defined between a trailing edge (32) of said translating sleeve (38) and said core cowl (26), and a duct (28) being defined between an inside surface of said translating sleeve (38) and said core cowl (26), said translating sleeve (38) translating axially downstream to cooperate with said decreasing downstream diameter of said core cowl to vary the area of said fan exhaust nozzle, the core cowl (26) and the translating sleeve (38) being configured and arranged such that said duct (28) has a generally convergent cross section for all positions of said translating sleeve (38).

2. A gas turbine engine (10) having a core engine (12) enclosed in a core cowl (26) and an outer nacelle (20) disposed about a longitudinal axis, said outer nacelle (20) being disposed radially outward of said core cowl (26) and spaced apart therefrom, said core cowl (26) having a generally conical shape with a decreasing downstream diameter, said gas turbine engine further comprising a translating sleeve (38) having a fully stowed position, a fully deployed position and a plurality of intermediate deployed positions, a fan exhaust nozzle (30) being defined between a trailing edge (32) of said translating sleeve (38) and said core cowl (26) and a duct (28) being defined between an inside surface of said translating sleeve (38) and said core cowl (26), said translating sleeve (38) translating axially downstream to cooperate with said decreasing downstream diameter of said core cowl to vary the area of said fan exhaust nozzle, the sleeve (38) and core cowl being configured and arranged such that the cross-sectional exit area of said nozzle (30) is monotonically increasing as a function of the length of translation of said sleeve (38).

3. A gas turbine engine (10) having a core engine (12) enclosed in a core cowl (26) and an outer nacelle (20), said outer nacelle (20) being disposed radially outward of said core cowl (26) and spaced apart therefrom, said outer nacelle having an upstream portion (22) and a downstream portion (24), said core coil (26) having a generally conical shape with a decreasing downstream diameter, said outer nacelle (20) having a thrust reverser (36) disposed within said downstream portion thereof, said thrust reverser having a stowed position, said thrust reverser moving axially downstream into a deployed position, said gas turbine engine characterized by:
a translating sleeve (38) slidingly mounted downstream of said thrust reverser having a fully stowed position, a fully deployed position and a plurality of intermediate deployed positions, a fan exhaust nozzle (30) being defined between a trailing edge (32) of said translating sleeve (38) and said core cowl, a duct (28) being defined between an inside surface of said translating sleeve (38) and said core cowl (26), said translating sleeve (38) being arranged to translate axially downstream in complete independence of said thrust reverser (36) to cooperate with said decreasing downstream diameter of said core cowl (26) to vary area of said fan exhaust nozzle (30) and to vary amount of airflow therethrough; and
a plurality of actuating means (76) providing translating movement to said translating sleeve between said fully stowed position and said fully deployed position.

4. The gas turbine engine according to claim 2 or 3 further characterized by said duct (28) having a generally convergent cross-sectional area for all positions of said translating sleeve (38).

5. The gas turbine engine according to claim 1, 3 or 4 further characterized by the cross-sectional exit area of said nozzle (30) being monotonically increasing as a function of the length of translation of said translating sleeve (38).

6. The gas turbine engine according to claim 2 or 5 further characterized by said cross-sectional exit area of said nozzle (30) increasing linearly as a function of the length of translation of said translating sleeve (38).

7. The gas turbine engine according to any preceding claim further characterized by said translating sleeve (38) having a plurality of semi-cylinders (90,91) engaged with each other along longitudinal edges thereof to form a continuous surface of said fan exhaust nozzle (30).

8. The gas turbine engine according to claim 7 further characterized by said semi-cylinders (90,91) of said translating sleeve (38) having sliding means (96) disposed on said longitudinal edges thereof to slidingly engage mating tracks (97) disposed on a latch mechanism (100) and a hinge mechanism (98) to provide sliding movement to said translating sleeve (38).

9. The gas turbine engine according to any preceding claim further characterized by a or said plurality of actuating means (76) for translating said sleeve (38) being hydraulically driven.

10. The gas turbine engine according to claim 9 further characterized by each said actuating means (76) having a cylinder (78) secured onto said gas turbine engine and a moveable rod (80) secured onto said translating sleeve (38), said rod (80) being retracted into said cylinder (78) in said fully stowed position and extended in said fully deployed position.
